Europäisches Patentamt

European Patent Office

Office européen des brevets

(19)

(11) **EP 1 039 653 A2**

(12) **EUROPEAN PATENT APPLICATION**

(43) Date of publication:
**27.09.2000 Bulletin 2000/39**

(51) Int. Cl.⁷: **H04B 1/707**

(21) Application number: **00105733.0**

(22) Date of filing: **17.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.03.1999 JP 7845499**

(71) Applicant:
**Matsushita Electric Industrial Co., Ltd.
Kadoma-shi, Osaka 571-8501 (JP)**

(72) Inventors:
• **Miya, Kazuyuki
  Kawasaki-shi, Kanagawa 215-0021 (JP)**
• **Ue, Toyoki
  Yokosuka-shi, Kanagawa 239-0847 (JP)**

(74) Representative:
**Grünecker, Kinkeldey,
Stockmair & Schwanhäusser
Anwaltssozietät
Maximilianstrasse 58
80538 München (DE)**

(54) **Apparatus and method for receiving and despreading DS-CDMA signals**

(57) The radio reception apparatus of the present invention obtains a despread signal of the reception signal with a high spreading factor by carrying out a correlation calculation using codes with a relatively low spreading factor and then carrying out multiplications/additions, thereby eliminating the need for a large-scale correlation circuit (processing circuit) even when using a relatively high spreading factor in a DS-CDMA (Direct Sequence CDMA) system, which uses layered (code treed) orthogonal spreading codes.

FIG.7

**EP 1 039 653 A2**

**Description**

BACKGROUND OF THE INVENTION

Field of the Invention

The present invention relates to a radio reception apparatus and radio reception method, and particularly relates to a radio reception apparatus and radio reception method in a CDMA (Code Division Multiple Access)-based digital radio communication system. Description of the Related Art

A CDMA (Code Division Multiple Access)-based digital radio communication system is a system that spreads an information signal using a spreading code, and therefore it is possible to identify the information signal from the corresponding spreading code. This allows a plurality of information signals to be multiplexed on a same frequency, making it possible to use frequencies more effectively.

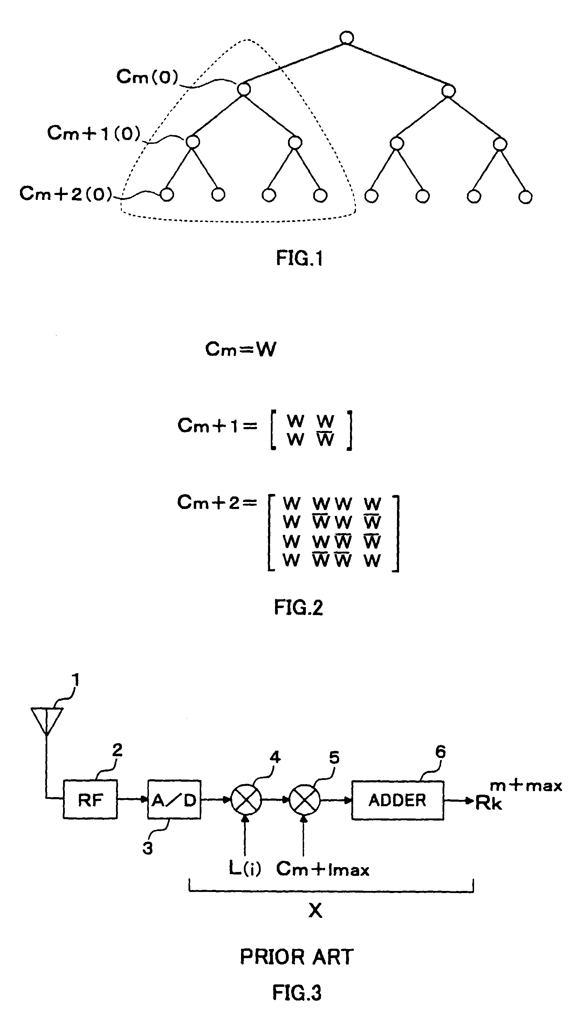

In this case, it is desirable that these spreading codes be orthogonal to each other. As such spreading codes, layered orthogonal codes such as Walsh codes are used, for example. These layered orthogonal codes constitute a code tree as shown in FIG.1.

The relationship between codes of different layers in this code tree is as shown in FIG.2 and is given by a Hadamard's matrix. That is, in this matrix, the matrix of the preceding order itself is placed at the positions of the first three matrices (W of $C_{m+1}$) and the inverted matrix of the preceding order is placed at the position (bottom right direction) of the remaining matrix (W bar of $C_{m+1}$). Here, m+1 of $C_{m+1}$ denotes a code order.

Despreading processing in a CDMA system using such layered orthogonal codes is explained using FIG.3. FIG.3 is a block diagram showing a configuration of a conventional radio reception apparatus.

In the radio reception apparatus shown in FIG.3, the signal received by antenna 1 is down-converted by RF section 2 and converted to a digital baseband signal by A/D converter 3. This baseband signal is despread by multipliers 4 and 5 using predetermined codes. That is, this baseband signal is multiplied by scrambling code L (i) in multiplier 4 and multiplied by spreading code $C_{m+1max}$ (i), a layered orthogonal code, by multiplier 5. Adder 6 integrates the despread signal and obtains despread signal $Rk^{m+1max}$. This multiplier 6 performs a calculation shown in expression (1) below:

$$\sum_{i=kM'}^{i=kM'+(M'-1)} \qquad\qquad \text{expression (1)}$$

where, i represents a chip; k represents a symbol number at $C_{m+1}$; and M' represents a chip length.

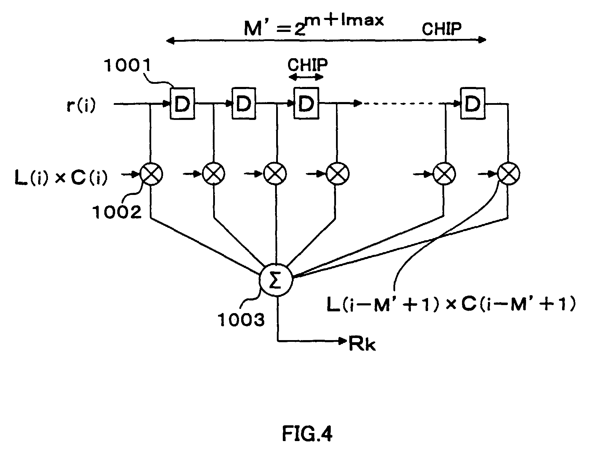

Multipliers 4 and 5 and adder 6 shown in FIG.3 constitute despreading circuit X and calculate a sum of products of a reception signal of a chip length per symbol or oversampling length and a replica signal of scrambling code L (i) and spreading code C (i). More specifically, this configuration is equivalent to that of the circuit shown in FIG.4.

In this despreading circuit, reception signal r (i) is input to each of delayers 11 for every chip and the reception signal is multiplied by a product of scrambling code L (i) by spreading code C (i) in multiplier 12. These multiplication results are added up by adder 13 and a despread signal is obtained. The number of delayers 11 in FIG.4 is determined according to a spreading factor. That is, the number of delayers 11 required is (the number of chips - 1), and therefore $(2^{m+1max} - 1)$ delayers 11 are required in the configuration described above.

Thus, in the despreading circuit shown in FIG.4, the number of delayers 11 is determined by the spreading factor. Therefore, as the spreading factor used is increased, the number of chips is increased. Thus, the number of delayers must be increased accordingly. For example, in the case of ×128 spreading, 127 (corresponding to oversampling when oversampling is taken into account) delayers are necessary.

Therefore, using a high spreading factor requires a correlation circuit (processing circuit) of a large hardware scale with many calculation elements corresponding to the high spreading factor.

SUMMARY OF THE INVENTION

It is an objective of the present invention to provide a radio reception apparatus and radio reception method of a small hardware scale capable of despreading a reception signal with a relatively high spreading factor.

A theme of the present invention is to eliminate the need for a large-scale correlation circuit (processing circuit) even using a relatively high spreading factor in a DS-CDMA (Direct Sequence CDMA) system in which layered (code-treed) direct sequence codes are used by obtaining a despread signal from a reception signal with a high spreading factor by carrying out correlation calculations using codes with a relatively low spreading factor and then carrying out multiplications/additions.

BRIEF DESCRIPTION OF THE DRAWINGS

The above and other objects and features of the invention will appear more fully hereinafter from a consideration of the following description taken in connection with the accompanying drawing wherein one example is illustrated by way of example, in which;

FIG.1 is a diagram showing a code tree of layered orthogonal codes;
FIG.2 is a diagram to explain layered orthogonal codes;
FIG.3 is a block diagram showing a configuration of a conventional radio communication apparatus;
FIG.4 is a block diagram showing a configuration of a despreading circuit of a conventional radio reception apparatus;
FIG.5 is a block diagram showing a configuration of a radio reception apparatus according to an embodiment of the present invention;
FIG.6 is a block diagram showing a configuration of a radio transmission apparatus that carries out a radio communication with the radio reception apparatus of the embodiment above;
FIG.7 is a block diagram showing a configuration of a despreading circuit of the radio reception apparatus according to the embodiment above;
FIG.8 is a diagram showing an example of multiplier/adder of the despreading circuit of the radio reception apparatus according to the embodiment above;
FIG.9 is a diagram showing another example of multiplier/adder of the despreading circuit of the radio reception apparatus according to the embodiment above; and
FIG.10 is a code timing chart in each code order of layered orthogonal codes.

DETAILED DESCRIPTION OF THE PREFERRED EMBODIMENTS

With reference now to the attached drawings, the embodiment of the present invention is explained in detail below.

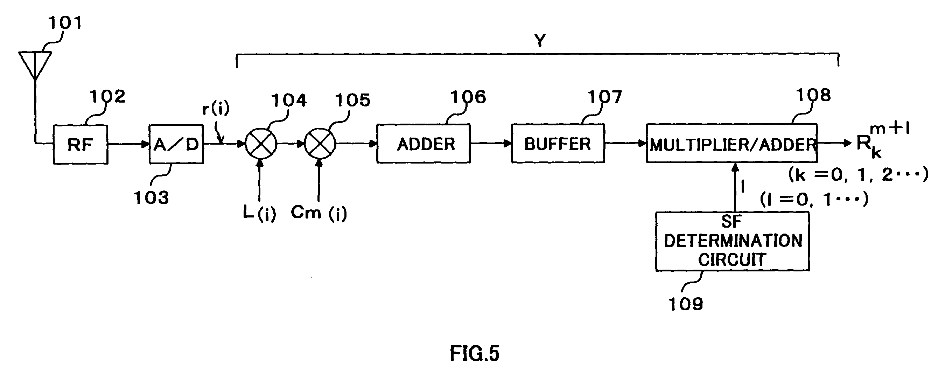

FIG.5 is a block diagram showing a configuration of a radio reception apparatus according to an embodiment of the present invention. In the radio reception apparatus shown in FIG.5, a signal received by antenna 101 is down-converted by RF section 102 and converted to a digital baseband signal by A/D converter 103. This baseband signal is despread using predetermined codes by multipliers 104 and 105. That is, the baseband signal is multiplied by scrambling code L (i) in multiplier 104 and multiplied by spreading code C (i), a layered orthogonal code, in multiplier 105. Adder 106 calculates an integrated value of the despread signal and obtains despread signal $Rj^m$ with a low spreading factor. This adder 106 carries out a calculation shown in expression (2) below:

$$\sum_{i=jM}^{i=jM+(M-1)} \quad (j=0, 1 \cdots) \qquad \text{expression (2)}$$

where, i represents a chip; M' represents a chip length; m represents a code order. Here, $M = 2^m$.

This despread signal $Rj^m$ with a low spreading factor is stored in buffer 107, multiplied and added by multiplier/adder 108 sequentially, and despread signal $Rk^{m+1}$ is obtained. At this time, the code order information obtained from the spreading factor determined by SF (spreading factor) determination circuit 109 is sent to multiplier/adder 108.

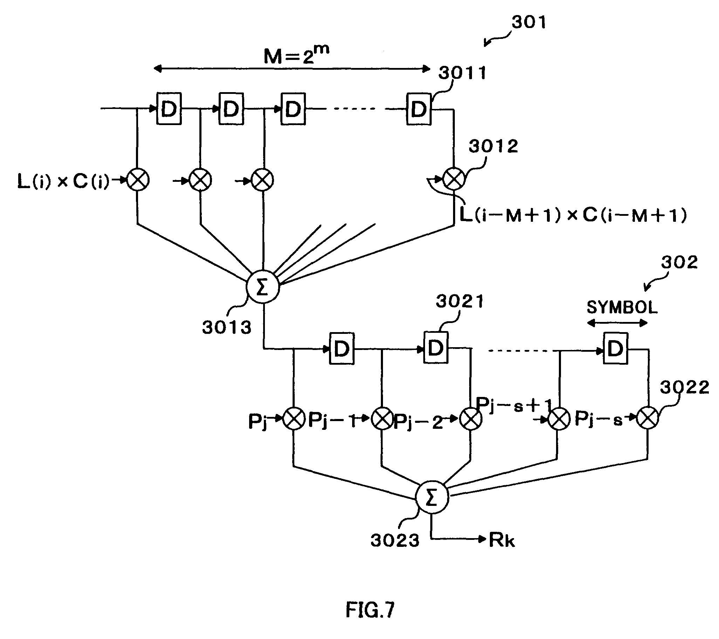

Multipliers 104 and 105, adder 106 and multiplier/adder 108 constitute despreading circuit Y and calculate a sum of products of the reception signal of a chip length per symbol or oversampling length and a replica signal of scrambling code L (i) and spreading code Cm (i). More specifically, despreading circuit Y has a configuration equivalent to that of the circuit shown in FIG.7.

The despreading circuit shown in FIG.7 comprises first calculation section 301 that despreads the reception signal using a spreading code with a low spreading factor to obtain a despread signal with a low spreading factor for every symbol and second calculation section 302 that multiplies the despread signals with a low spreading factor by +1 or -1 and then adds up these despread signals into one despread signal. First calculation section 301 corresponds to multipliers 104 and 105 and adder 106 shown in FIG.5 and second calculation section 302 corresponds to multiplier/adder 108 shown in FIG.5.

First calculation section 301 comprises delayers 3011 that delay the input signal for every chip, multipliers 3012 that multiply the input signal by a replica signal of scrambling code L (i) and spreading code Cm (i) with a low spreading factor and adder 3013 that integrates the multiplication results.

On the other hand, second calculation section 302 comprises delayers 3021 that delay the output of adder 3013 of first calculation section 301 for every symbol, multipliers 3022 that multiply the output above by +1 or -1 and adder 3023 that integrates the multiplication results.

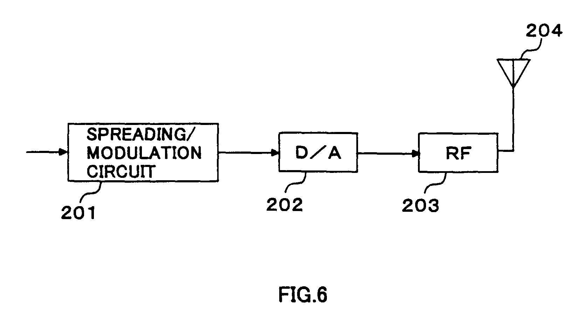

Then, the operation of the radio communication system including the radio reception apparatus with the configuration above is explained using FIG.5 to FIG.7. FIG.6 is a block diagram showing an outlined configuration of a radio transmission apparatus that carries out a radio communication with the radio reception apparatus above. The processing in the despreading circuit is explained using FIG.7.

In the radio transmission apparatus shown in FIG.6 a transmission signal is spread with a predetermined spreading factor by spreading modulation section 201, converted to an analog signal by D/A converter 202, up-converted by RF section 203 and transmitted via antenna 204.

The signal transmitted from the radio transmission apparatus is received from antenna 101 of the radio reception apparatus shown in FIG.5, down-converted by RF section 102, A/D-converted by A/D converter 103 and input to despreading circuit Y.

In despreading circuit Y, the reception signal (baseband signal) is despread by the first calculation section using a spreading code of a low spreading factor, and a despread signal with a low spreading factor is obtained for every symbol. That is, as shown in FIG.7, the reception signal is input to delayers 3011 one by one for every chip. Then, each of multipliers 3012 multiplies the reception signal by a replica signal of scrambling code L (i) and spreading code Cm (i) with a low spreading factor and adder 3013 adds up the multiplication results, that is, calculates a sum of products. This despreading result with a low spreading factor is stored in buffer 107 until the spreading factor is determined. This despreading result with a low spreading factor is data in symbol units. This despreading result is obtained according to expression (3) below:

$$R_j{}^m = \sum_{i=jM}^{i=M+(M-1)} r(i) \cdot L(i) \cdot Cm(i) \qquad (j=0, 1, 2 \cdot \cdot \cdot) \qquad \text{expression (3)}$$

where, i represents a chip; M represents a chip length; m represents a code order. Here, $M = 2^m$.

The despreading results with a low spreading factor stored in buffer 107 are input to delayers 3021 of second calculation section 302 one by one for every symbol after the transmitting side determines the spreading factor of the spreading code applied to the transmission signal. Then, the despreading results are multiplied by 1 or -1 in multipliers 3022 according to a higher code order matrix and then adder 3023 integrates the multiplication results. The despread signal is obtained in this way.

Here, second calculation section 302 of despreading circuit Y is explained.

First calculation section 301 of despreading circuit Y despreads the reception signal using a spreading code with a low spreading factor. For example, first calculation section 301 despreads a ×128-spread signal using a spreading code with spreading factor × 32. That is, a spreading code (spreading code 2 ranks higher in the code order of the code tree in FIG.1) with a spreading factor, which is 1/4 of the spreading factor of the spreading code used for the transmitted signal is used. This low spreading factor (here ×32) should be set beforehand.

Second calculation section 302 determines the spreading factor of the spreading code used for the transmitted signal and then performs multiplications and additions based on the determination result. That is, second calculation section 302 sets an addition count according to the difference in the code order between the low spreading factor in first calculation section 301 and the spreading factor of the spreading code used for the transmission signal.

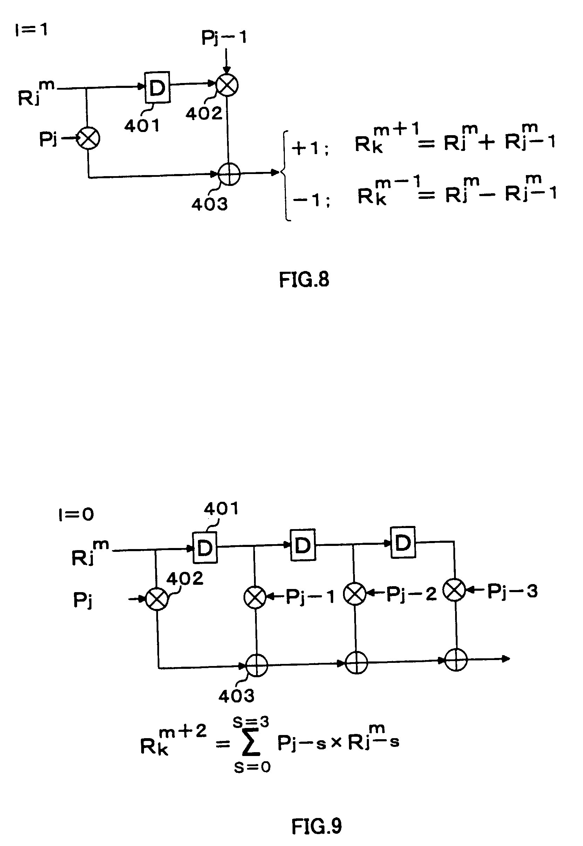

More specifically, if difference (1) in the code order is 1 (here, suppose the low spreading factor in first calculation section 301 is ×16 and the spreading factor of the spreading code used for the transmission signal is ×32), the configuration of second calculation section 302 is as shown in FIG.8. Here, reference code 401 represents a delayer, reference code 402 represents a multiplier and reference code 403 represents an adder.

After the spreading factor of the spreading code used for the transmission signal is determined to be × 32, the ×16-despread signal obtained by first calculation section 301 is input to delayer 401 for every symbol. The ×32-despread signal is equivalent to 2 symbols of the ×16-despread signal. Therefore, as the configuration shown in FIG.8, the input signal is delayed by one symbol to correspond to 2 symbols of the ×16-despread signal and this signal is multiplied by 1 or -1 and these multiplication results are added up. In this way, it is possible to obtain a ×32-despread signal as shown in expression (4) below:

$$R_k{}^{m+1} = \sum_{S=0}^{S=1} Pj\text{-}s \times Rj\text{-}_s{}^m \qquad \text{expression (4)}$$

where, S represents the number of delayers by symbol; $R_k$ represents a despread signal; $P_j$ is 1; $P_{j-s}$ is 1 or -1; $R_j$ represents a despread signal with a low spreading factor; and m represents a code order.

1 or -1 multiplied on the ×16-despread signal follows the matrix of layered orthogonal spreading codes. In the example above, calculation is performed for 2 symbols of the ×16-despread signal, and therefore which of 1 or -1 is used follows matrix $C_{m+1}$ shown in FIG.2 (W multiplies by 1 and W bar multiplies by -1).

For example, since (1, 1) is multiplied at the upper row (W, W) of matrix $C_{m+1}$, the preceding symbols are directly input to adder 403 and the following symbols are input to multiplier 403 after multiplying them by 1 in multiplier 402.

On the other hand, since (1, -1) is multiplied at the lower row (W, W bar) of matrix $C_{m+1}$, the preceding symbols are directly input to adder 403 and the following symbols are input to multiplier 403 after multiplying them by -1 in multiplier 402.

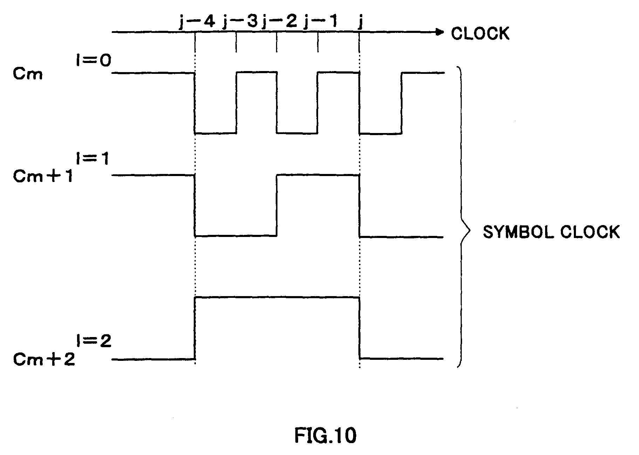

Then, if difference (1) in the code order is 2 (here, suppose the low spreading factor in first calculation section 301 is ×32 and the spreading factor of the spreading code used for the transmission signal is × 128), the configuration of second calculation section 302 is as shown in FIG.9. Here, 401 represents delayers, 402 represents multipliers and 403 represents adders.

After the spreading factor of the spreading code used for the transmission signal is determined to be × 128, the ×32-despread signal obtained by first calculation section 301 is input to delayers 401 for every symbol. A ×128-despread signal is equivalent to 4 symbols of a ×32-despread signal. Therefore, as the configuration shown in FIG.9, the input signal is delayed by one symbol to correspond to 4 symbols of the ×32 despread signal and this signal is multiplied by 1 or -1 and the multiplication results are added up. In this way, it is possible to obtain a ×128-despread signal as shown in expression (5) below:

$$R_k^{m+2} = \sum_{S=0}^{S=3} P_{j-s} \times R_{j-s}^m \qquad (P_{j-s}=\pm 1) \qquad \text{expression (5)}$$

where, S represents the number of delayers by symbol; $R_k$ represents a despread signal; $P_j$ is 1; $P_{j-s}$ is 1 or -1; $R_j$ represents a despread signal with a low spreading factor; and m represents a code order.

1 or -1 multiplied on the ×32despread signal follows the matrix of layered orthogonal spreading codes as shown above. In this example, calculation is performed for 4 symbols of the ×32-despread signal, and therefore which of 1 or -1 is used follows matrix $C_{m+2}$ shown in FIG.2 (W multiplies by 1 and W bar multiplies -1).

For example, since (1, 1, 1, 1) is multiplied at the top row (W, W, W, W) of matrix $C_{m+2}$, all symbols are multiplied by 1 and input to adders 403.

Furthermore, since (1, -1, 1, -1) is multiplied at the second row (W, W bar, W, W bar) of matrix $C_{m+2}$, the first and third symbols are multiplied by 1 and input to adders 403 and the second and fourth symbols are multiplied by -1 and input to adders 403.

Furthermore, since (1, 1, -1, -1) is multiplied at the third row (W, W, W bar, W bar) of matrix $C_{m+2}$, the first and second symbols are multiplied by 1 and input to adders 403 and the third and fourth symbols are multiplied by -1 and input to adders 403.

Furthermore, since (1, -1, -1, 1) is multiplied at the fourth row (W, W bar, W bar, W) of matrix $C_{m+2}$, the first and fourth symbols are multiplied by 1 and input to adders 403 and the second and third symbols are multiplied by -1 and input to adders 403.

As shown above, when the difference in the code order is 1, the despread signal can be obtained as shown in expression (6) below. This difference in the code order can be determined after the spreading factor is determined by SF determination circuit 109.

$$R_k^{m+l} = \sum_{S=0}^{S=2^l-1} P_{j-s} \times R_{j-s}^m \qquad (P_{j-s}=\pm 1) \qquad \text{expression (6)}$$

where, S represents the number of delayers by symbol; $R_k$ represents a despread signal; $P_j$ is 1; $P_{j-s}$ is 1 or -1; $R_j$ represents a despread signal with a low spreading factor; and m and l represent a code order. As shown in FIG.10, it is a requisite that symbol clocks be consistent in difference l of each code order.

As described above, the radio reception apparatus according to the present embodiment can obtain a despread signal from the reception signal with a high spreading factor by carrying out a correlation calculation with a code with a low spreading factor in despreading circuit Y and then carrying out multiplications/additions. That is, the present embodiment determines the spreading factor, finds a relationship in the layered orthogonal spreading codes, specifies an addition count from this relationship and obtains a despread signal from the reception signal with a high spreading factor.

This will eliminate the need for a large-scale correlation circuit (processing circuit) corresponding to a high spreading factor. Moreover, since a despread signal with a low spreading factor not at the chip level but at the symbol level is stored in a buffer, it is possible to drastically reduce the memory capacity required (a fraction of spreading factor or a fraction of spreading factor × oversampling number in the case of oversampling).

Furthermore, the symbol stored in the buffer is at the symbol level, which can reduce the memory accessing speed compared with the chip level (a fraction of spreading factor or a fraction of spreading factor × oversampling number in the case of oversampling). Thus, drastic improvement in aspects of the hardware scale and cost can be expected.

The radio reception apparatus according to the present embodiment is extremely effective when applied to variable rate transmission with a variable spreading factor. When the variable spreading code varies according to a certain rule, for example, when the spreading code is used in a same code tree (the area enclosed with dotted line in FIG.1) shown in FIG.1, it is possible to obtain a despread signal of a desired spreading factor by simply carrying out a correlation calculation with the lowest spreading factor in the same tree, storing a despread signal with a low spreading factor and carrying out simple multiplications/additions as described above when the spreading factor is detected.

The radio reception apparatus according to the present embodiment is applicable to a communication terminal apparatus such as a mobile station apparatus and base station apparatus in a digital radio communication system. This allows a despreading processing circuit with a small circuit scale to be implemented, achieving miniaturization and simplification of the apparatus.

The present invention is not limited to the embodiment described above, but can be implemented with various modifications. For example, the low spreading factor can be changed and set to any value as appropriate.

As described above, the radio reception apparatus and radio reception method of the present invention obtains a despread signal from the reception signal with a high spreading factor by carrying out a correlation calculation using codes with a low spreading factor and carrying out multiplications/additions, thus can perform despreading processing on a reception signal with a relatively high spreading factor with small-scale hardware.

The present invention is not limited to the above described embodiments, and various variations and modifications may be possible without departing from the scope of the present invention.

This application is based on the Japanese Patent Application No.HEI 11-078454 filed on March 23, 1999, entire content of which is expressly incorporated by reference herein.

**Claims**

1. A radio reception apparatus comprising:

   reception means for receiving a signal spread using a first spreading code;
   first calculation means(3011-3013) for carrying out despreading processing on said signal using a second spreading code, which has a lower spreading factor than the spreading factor of the first spreading code used for said signal and obtaining a despread signal with a low spreading factor;
   second calculation means(3021-3023) for multiplying said despread signal with a low spreading factor by a factor and then adding up the multiplication results to obtain a despread signal; and
   demodulating means for demodulating said despread signal to obtain reception data.

2. The radio reception apparatus according to claim 1, wherein the first and second spreading codes are layered orthogonal spreading codes that can be expressed in a code tree and belong to the same code tree.

3. The radio reception apparatus according to claim 1 or claim 2, further comprising spreading factor determining means(109) for determining the spreading factor of the first spreading code, wherein said second calculation means, after said spreading factor determining means(109) determines the spreading factor, performs a calculation based on said determined spreading factor.

4. A despreading processing apparatus comprising:

   first calculation means(3011-3013) for carrying out despreading processing on a reception signal using a second spreading code with a lower spreading factor than the spreading factor of a first spreading code used for said reception signal and obtaining a despread signal with a low spreading factor; and
   second calculation means(3021-3023) for obtaining a despread signal by multiplying said despread signal with a low spreading factor by a factor and then adding up the multiplication results.

5. The despreading processing apparatus according to claim 4, wherein the first and second spreading codes are layered orthogonal spreading codes that can be expressed in a code tree and belong to the same code tree.

6. The despreading processing apparatus according to claim 4, further comprising spreading factor determining means(109) for determining the spreading factor of the first spreading code, wherein said second calculation means, after said spreading factor determining means(109) determines the spreading factor, carries out a calculation based on said determined spreading factor.

7. A radio reception method comprising:

the receiving step of receiving a signal spread using a first spreading code;
the first calculating step of carrying out despreading processing on said signal using a second spreading code, which has a lower spreading factor than the spreading factor of the first spreading code used for said signal and obtaining a despread signal with a low spreading factor;
the second calculating step of multiplying said despread signal with a low spreading factor by a factor and then adding up the multiplication results to obtain a despread signal; and
the demodulating step of demodulating said despread signal to obtain reception data.

FIG.1

$$C_m = W$$

$$C_{m+1} = \begin{bmatrix} W & W \\ W & \overline{W} \end{bmatrix}$$

$$C_{m+2} = \begin{bmatrix} W & W & W & W \\ W & \overline{W} & W & \overline{W} \\ W & W & \overline{W} & \overline{W} \\ W & \overline{W} & \overline{W} & W \end{bmatrix}$$

FIG.2

PRIOR ART

FIG.3

$$M' = 2^{m+Imax} \quad \text{CHIP}$$

1001

CHIP

r(i)

L(i) × C(i)

1002

Σ

1003

L(i−M'+1) × C(i−M'+1)

Rk

FIG.4

FIG.5

204

| | | |
|---|---|---|
| SPREADING/ MODULATION CIRCUIT | D／A | RF |

201                     202        203

FIG.6

FIG.7

EP 1 039 653 A2

$I=1$

$$R_k^{m+1} = R_j^m + R_{j-1}^m \quad (+1)$$
$$R_k^{m-1} = R_j^m - R_{j-1}^m \quad (-1)$$

**FIG.8**

$I=0$

$$R_k^{m+2} = \sum_{s=0}^{s=3} P_{j-s} \times R_{j-s}^m$$

**FIG.9**

FIG.10